# EUROPEAN PATENT APPLICATION

(11) **EP 4 664 334 A1**
(43) Date of publication of application: **17.12.2025**
(21) Application number: 24197781.8
(22) Date of filing: 01.09.2024
(51) Int. Cl.: G06F 21/57, G06F 21/85, H04L 9/40

(54) **COMPUTER SYSTEM AND COMPUTER DEVICE**

(30) Priority: 12.06.2024 CN 202410755669
(71) Applicant: Moxa Inc., New Taipei City 242 (TW)
(72) Inventor: Tung, Chien-Lung, 242 New Taipei City (TW)
(74) Representative: Straus, Alexander

(57) **Abstract**

A computer system includes a peripheral device (20); and a computer device (10), coupled to the peripheral device (20) through a physical channel, configured to access the peripheral device (20), comprising: a reset module (102), configured to output a reset signal; a switching module (104), coupled to the reset module (102); a processing module (106), coupled to the reset module (102) and the switching module (104); and a storage module (108), coupled to the processing module (106), storing a program code to instruct the processing module (106) to perform the following steps: generating a control signal according to the reset signal; and controlling the switching module (104) to generate a switching signal to instruct the peripheral device (20) to enable, disable or prohibit tampering according to the control signal and the reset signal.

## Description

### Field of the Invention

The present application relates generally to a computer system and computer device, and more particularly, to a computer system and computer device capable of preventing a boot loader from being tampered with.

### Background of the Invention

In the secure boot process of computer devices, the use of a chain of trust is taken into consideration. During the secure boot process, the computer device verifies the integrity and authenticity of the software, firmware, and configuration data required for the secure boot process through the root of trust (RoT) capabilities. However, there is a physical channel between the computer device in the prior art and the peripheral device storing the boot loader, and the boot loader may be attacked or tampered with through the physical channel. Under such circumstances, how to improve computer systems to prevent startup programs from being tampered with has become one of the goals that the industry is striving for.

### Summary of the Invention

This is achieved by a computer system and computer device according to the independent claims 1 and 2. The dependent claims pertain to corresponding further developments and improvements.

As will be seen more clearly from the detailed description following below, a computer system is disclosed herein. The computer system includes a peripheral device; and a computer device, coupled to the peripheral device through a physical channel, configured to access the peripheral device, the computer device includes a reset module, configured to output a reset signal; a switching module, coupled to the reset module; a processing module, coupled to the reset module and the switching module; and a storage module, coupled to the processing module, storing a program code to instruct the processing module to perform the following steps: generating a control signal according to the reset signal; and controlling the switching module to generate a switching signal to instruct the peripheral device to enable, disable or prohibit tampering according to the control signal and the reset signal.

In another aspect of the invention, a computer device is disclosed in the detailed description here below. The computer device, coupled to a peripheral device through a physical channel, configured to access the peripheral device, includes a reset module, configured to output a reset signal; a switching module, coupled to the reset module; a processing module, coupled to the reset module and the switching module; and a storage module, coupled to the processing module, storing a program code to instruct the processing module to perform the following steps: generating a control signal according to the reset signal; and controlling the switching module to generate a switching signal to instruct the peripheral device to enable, disable or prohibit tampering according to the control signal and the reset signal.

### Brief Description of the Drawings

FIG. 1 is a schematic diagram of a computer system according to an embodiment of the present invention.
FIG. 2 is a schematic diagram of a computer system according to another embodiment of the present invention.
FIG. 3 is a schematic diagram of a computer system according to another embodiment of the present invention.
FIG. 4 is the detail circuit diagram and the truth table of the SR latch.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to". Also, the term "couple" is intended to mean either an indirect or direct electrical connection. Accordingly, if one device is coupled to another device, that connection may be through a direct electrical connection, or through an indirect electrical connection via other devices and connections.

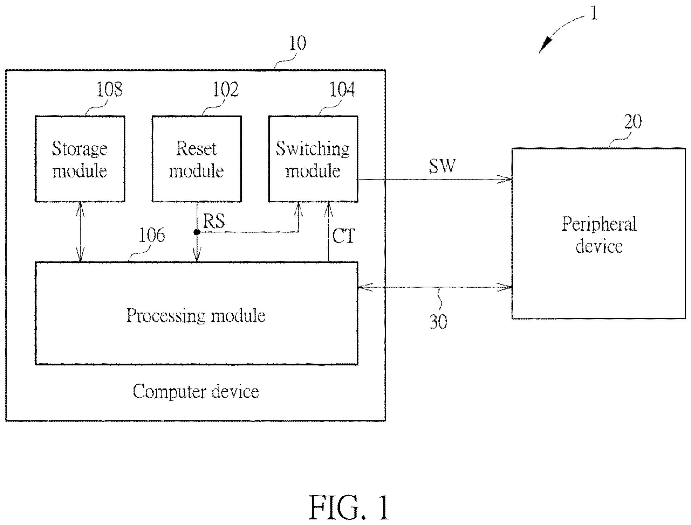

Please refer to FIG. 1. FIG. 1 is a schematic diagram of a computer system 1 according to an embodiment of the present invention. The computer system 1 includes a computer device 10 and a peripheral device 20. The computer device 10 may access the peripheral device 20 through a physical channel 30. In addition, during various stages of access between the computer device 10 and the peripheral device 20, the computer device 10 may generate a switching signal SW to instruct the peripheral device 20 to enable, disable or prohibit tampering. The peripheral device 20 may include an analog to digital convertor, a digital to analog convertor, a random-access memory (RAM), a flash memory, an embedded multimedia card (eMMC), a secure digital (SD) card or an universal serial bus (USB) device, but are not limited thereto. The physical channel 30 may include a serial peripheral interface bus (SPI), an inter-integrated circuit (I²C) or other input and output interfaces, but is not limited thereto.

In detail, the computer device 10 includes a reset module 102, a switching module 104, a processing module 106 and a storage module 108. The reset module 102 may generate and output a reset signal RS to the processing module 106 and the switching module 104 according to various stages of access between the computer device 10 and the peripheral device 20 or requirements of the computer system 1. The processing module 106 is coupled to the reset module 102, the switching module 104 and the storage module 108. The storage module 108 stores a program code for instructing the processing module 106 to generate a control signal CT to the switching module 104 according to the reset signal RS generated by the reset module 102, and then control the switching module 104 to generate the switching signal SW according to the control signal CT and the reset signal RS. In this way, the computer device 10 may instruct the peripheral device 20 to enable, disable or prohibit tampering according to the switching signal SW. In an embodiment, the switching signal SW may instruct to close the physical channel 30 to prohibit tampering with data in the peripheral device 20 through the physical channel 30, or instruct to turn off the power supply of the peripheral device 20 to disable the peripheral device 20 and avoid attacks through the physical channel 30.

In an embodiment, the computer device 10 may bootstrap access to the peripheral device 20 through a root of trust (RoT) process. The reset module 102 may determine whether the RoT process is in an initial stage, and output the reset signal RS accordingly. For example, the reset signal RS may have a first state (high voltage level) and a second state (low voltage level). When the RoT process starts, the reset signal RS output by the reset module 102 is in the first state, and the switching signal SW indicates to the peripheral device 20 to disable or prohibit tampering. When the RoT process has not yet started, the reset signal RS output by the reset module 102 is in the second state, and the switching signal SW indicates to the peripheral device 20 to enable or not to change status. It should be noted that the reset module 102 may determine the stage of the RoT process, which is not limited to the initial stage, and the operating principle of the RoT process should be well known in the art, so it is not repeated here.

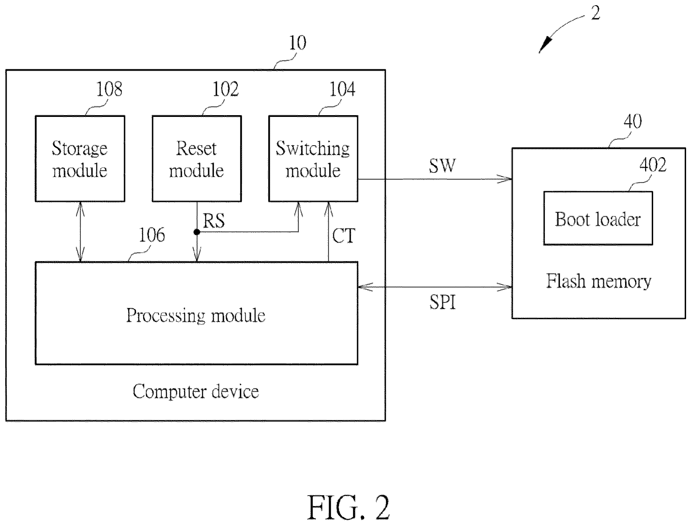

In another embodiment, please refer to FIG. 2. FIG. 2 is a schematic diagram of a computer system 2 according to an embodiment of the present invention. The computer system 2 is derived from the computer system 1, so the same components are represented by the same symbols. The difference between the computer system 2 and the computer system 1 is that the peripheral device 20 is a flash memory 40 that accesses the computer device 10 through the serial peripheral interface bus SPI, and the flash memory 40 stores a boot loader 402. Specifically, the flash memory 40 may inject the boot loader 402 into the processing module 106 of the computer device 10, and the computer device 10 may verify the boot loader 402 through the RoT process and perform a secure boot. Furthermore, when the RoT process starts, the reset signal RS output by the reset module 102 is in the first state, and the switching signal SW indicates to the flash memory 40 to disable or prohibit tampering. When the RoT process has not yet started, the reset signal RS output by the reset module 102 is in the second state, and the switching signal SW indicates to the flash memory 40 to enable or not to change the status. It should be noted that the switching signal SW may be transmitted to a first pin Hold or a second pin WP corresponding to the serial peripheral interface bus SPI in the flash memory 40, to indicate to turn off the serial peripheral interface bus SPI, thereby prohibiting tampering the boot loader 402 in the flash memory 40 through the serial peripheral interface bus SPI, or to indicate to turn off the power supply of the flash memory 40, to disable the flash memory 40 and avoid attacks through the serial peripheral interface bus SPI. It should be noted that the pin configuration of the flash memory 40 and the operating principle of the boot loader should be well known in the art, so it is not repeated here.

FIG. 1 and FIG. 2 illustrate possible implementations of the computer system. Any computer system that may instruct the peripheral device to enable, disable or prohibit tampering according to the switching signal may be used to implement the computer system of the present invention, but is not limited thereto. For example, in addition to determining the stage of the RoT process, the reset module 102 may also determine whether the computer system is powered on. The computer system 1 and the computer system 2 may instruct the peripheral device to enable, disable or prohibit tampering according to different stages of the power supply.

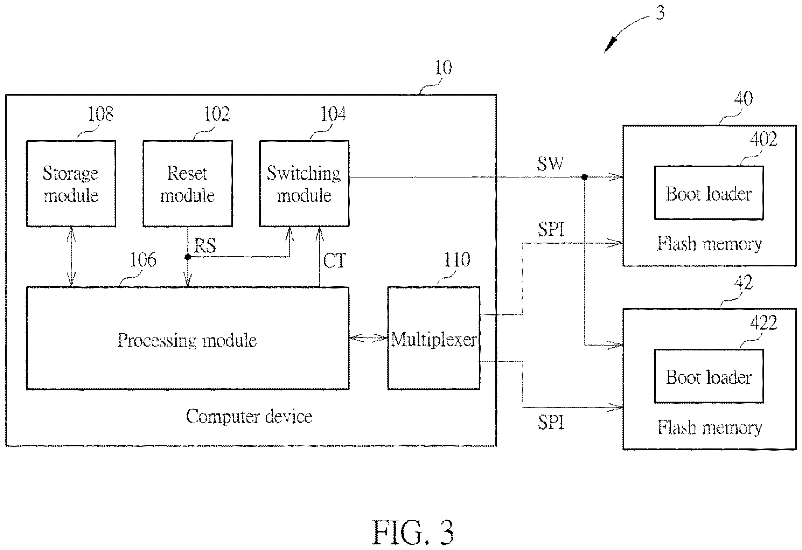

It should be noted that the computer system 1 and the computer system 2 are only embodiments of the present invention, and those skilled in the art may make appropriate adjustments according to the system requirements. For example, FIG. 3 is a schematic diagram of a computer system 3 according to another embodiment of the present invention. The computer system 3 is derived from the computer system 2, and further includes a multiplexer (Mux) 110. The Mux 110 is coupled between the processing module 106, the flash memory 40 and a flash memory 42. The flash memory 40 and the flash memory 42 respectively store the boot loader 402 and a boot loader 422 corresponding to different stages. When the computer system 3 is powered on, the processing module 106 loads and executes the boot loader 402 from the flash memory 40 through the Mux 110. After the processing module 106 completes the integrity check of the boot loader 402, the processing module 106 loads and executes the boot loader 422 from the flash memory 42 through the Mux 110. Furthermore, the reset module 102 may determine the stage of the RoT process, the status of the power supply and/or the stage of the boot loader, and generate the switching signal SW accordingly to indicate to disable or prohibit tampering with the flash memory 40, the flash memory 42 or the Mux 110. The detailed description and the derivative changes of the computer system 3 may refer to the above-mentioned description, and will not be repeated here.

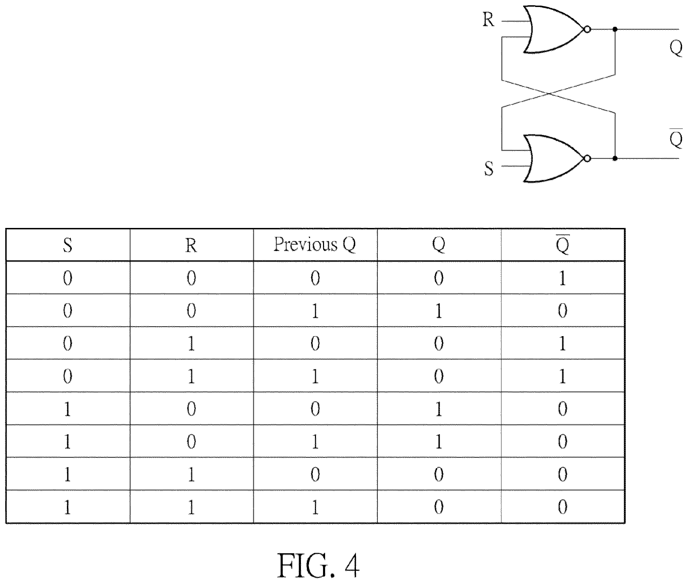

Furthermore, the switching module 104 may be an SR latch shown in FIG. 4. FIG. 4 is a detailed circuit diagram and a truth table of the SR latch. The SR latch includes two mutually exclusive OR gates (XOR) that are interleaved with each other, the reset signal RS and the control signal CT may be input to a first input end R and a second input end S of the SR latch respectively, and the SR latch may output the switching signal SW. In this way, through the truth table of the SR latch, the present invention may appropriately choose to generate the corresponding switching signal SW at any stage of the RoT process, any status of the power supply and/or any stage of the boot loader, to indicate to the peripheral device 20 to enable, disable or prohibit tampering. It should be noted that the SR latch should be well known in the art, and will not be repeated here.

It should be noted that the computer systems 1-3 are different embodiments of the present invention. Those skilled in the art should readily make combinations, modifications and/or alterations on the abovementioned description and examples. The abovementioned description, steps, procedures and/or processes including suggested steps can be realized by means that could be hardware, software, firmware (known as a combination of a hardware device and computer instructions and data that reside as read-only software on the hardware device), an electronic system, or combination thereof. Examples of hardware can include analog, digital and mixed circuits known as microcircuit, microchip, or silicon chip. Examples of the electronic system may include a system on chip (SoC), system in package (SiP), a computer on module (CoM) and the computer systems 1-3. Any of the abovementioned procedures and examples above may be compiled into program codes or instructions that are stored in the storage module 108. The storage module 108 may include read-only memory (ROM), flash memory, random access memory (RAM), subscriber identity module (SIM), hard disk, or CD-ROM/DVD-ROM/BD-ROM, but not limited thereto. The processing module 106 may read and execute the program codes or the instructions stored in the storage module 108 for realizing the abovementioned functions.

In summary, the computer system and the computer device of the present invention may appropriately choose to generate the corresponding switching signal to indicate to the peripheral device to enable, disable or prohibit tampering in any stage of the RoT process, any status of the power supply and/or any stage of the boot loader. In this way, compared with the prior art, the computer system of the present invention may prevent the boot loader being attacked or tampered with through the physical channel.

## Claims

1. A computer system (1), **characterized by** comprising:
a peripheral device (20); and
a computer device (10), coupled to the peripheral device (20) through a physical channel, configured to access the peripheral device (20), comprising:
a reset module (102), configured to output a reset signal;
a switching module (104), coupled to the reset module (102);
a processing module (106), coupled to the reset module (102) and the switching module (104); and
a storage module (108), coupled to the processing module (106), storing a program code to instruct the processing module (106) to perform the following steps:
generating a control signal according to the reset signal; and
controlling the switching module (104) to generate a switching signal to instruct the peripheral device (20) to enable, disable or prohibit tampering according to the control signal and the reset signal.

2. A computer device (10), coupled to a peripheral device (20) through a physical channel, configured to access the peripheral device (20), **characterized by** comprising:
a reset module (102), configured to output a reset signal;
a switching module (104), coupled to the reset module (102);
a processing module (106), coupled to the reset module (102) and the switching module (104); and
a storage module (108), coupled to the processing module (106), storing a program code to instruct the processing module (106) to perform the following steps:
generating a control signal according to the reset signal; and
controlling the switching module (104) to generate a switching signal to instruct the peripheral device (20) to enable, disable or prohibit tampering according to the control signal and the reset signal.

3. The computer system (1) of claim 1 or the computer device (10) of claim 2, **characterized in that** the computer device (10) bootstraps access to the peripheral device (20) through a root of trust process.

4. The computer system (1) or the computer device (10) of claim 3, **characterized in that** when the reset module (102) determines that the root of trust process has started, the reset module (102) outputs the reset signal in a first state, and the switching signal indicates to the peripheral device (20) to disable or prohibit tampering.

5. The computer system (1) or the computer device (10) of claim 4, **characterized in that** the switching signal indicates to the peripheral device (20) to close the physical channel to prohibit tampering the peripheral device (20).

6. The computer system (1) or the computer device (10) of claim 4, **characterized in that** the switching signal indicates to the peripheral device (20) to turn off a power supply to disable the peripheral device (20).

7. The computer system (1) or the computer device (10) of claim 3, **characterized in that** the peripheral device (20) is a serial peripheral interface flash memory that stores a boot program, and the computer device (10) verifies the boot program through the root of trust process.

8. The computer system (1) or the computer device (10) of claim 7, **characterized in that** when the reset module (102) determines that the root of trust process has started, the reset module (102) outputs the reset signal in a first state, and the switching signal indicates to the serial peripheral interface flash memory to disable or prohibit tampering.

9. The computer system (1) or the computer device (10) of claim 8, **characterized in that** the switching signal indicates to the serial peripheral interface flash memory to close the physical channel to prohibit tampering the serial peripheral interface flash memory.

10. The computer system (1) or the computer device (10) of claim 8, **characterized in that** the switching signal indicates to the serial peripheral interface flash memory to turn off a power supply to disable the serial peripheral interface flash memory.

11. The computer system (1) of claim 1 or the computer device (10) of claim 2, **characterized in that** the switching module (104) is an SR latch.
